# EUROPEAN PATENT SPECIFICATION

(11) **EP 2 755 920 B1**
(45) Date of publication and mention of the grant of the patent: **17.06.2020**
(21) Application number: 12772369.0
(22) Date of filing: 12.09.2012
(51) Int. Cl.: B01D 61/14, B01D 61/58, B01D 61/02, C02F 1/44, C02F 1/00, B01D 63/02, B01D 61/08

(54) **A WATER CONTAINER**
WASSERBEHÄLTER
RÉCIPIENT À EAU

(30) Priority: 12.09.2011 GB 201115680
(43) Date of publication of application: 23.07.2014
(73) Proprietor: Lifesaver IP Limited, GB-Staffordshire ST3 1PH (GB)
(72) Inventor: PRITCHARD, Michael, Copford Colchester Essex CO6 1YS (GB)
(74) Representative: Swindell & Pearson Limited
(86) International application number: PCT/GB2012/052254
(87) International publication number: WO 2013/038178

(56) References cited:
- EP-A1- 0 338 844
- WO-A1-2010/091467
- DE-U1-202005 014 809
- GB-A- 1 436 111
- GB-A- 2 473 256
- US-A1- 2008 087 596
- US-B1- 7 824 546

## Description

### Field of the Invention

The present invention relates to a water container for removing impurities from water to provide sterile, safe drinking water.

### Background to the Invention

Water is heavy. Delivering it over even short distances is time consuming and expensive. It requires long logistic chains to maintain supplies. This problem is acutely evident during military or humanitarian operations.

If personnel choose to drink water from the surrounding environment they run the risk of becoming struck down by disease through the ingestion of bacteria or viruses living naturally in the water.

Our published International patent application WO2008/037969 discloses a water bottle having a water filter which removes sediments and other deposits from the water and has a retention of greater than 99.9999% of bacteria, cysts, parasites and fungi, and greater than 99.99% of viruses from the water.

One well known container used to carry larger volumes of water is the ubiquitous "jerrycan", originally designed at the outbreak of World War II, and much copied since. Although originally manufactured from pressed steel, modern jerrycans are now typically manufactured from plastics in various sizes from 5L to 20L. Jerrycans are still used extensively by the military and aid agencies to carry clean supplies of water to locations where it is needed. Our published International patent application WO2011/027125 discloses an improved jerrycan which incorporates the water filtration technology disclosed in WO2008/037969. An 18.5 litre version of this innovative jerrycan has been successfully deployed by aid agencies in Haiti and Pakistan, and also by the military on various operations around the world.

Experience in the field has shown that there is a desire for a water container having a smaller capacity than those currently available, especially since children are often required to fetch and carry water.

EP 0 338 844 A1, WO 2010/091467 A1 and US 2008/0087596 A1 disclose examples of water containers which use fibre membrane filtration elements.

EP 0 338 844 discloses a device for dispersing a liquid, including a container having an interior space accommodating the liquid, a first valve attached to the container, a delivery path having one end submerged in the liquid and extending through the container such that the other end is outside the container, and a second valve disposed in the delivery path for closing and opening the delivery path.

WO 2010/091467 A1 discloses a filtering apparatus for the filtering of a liquid such as water, wherein the vessel has a filtration element located at the outlet and extending into the vessel.

US 2008/0087596 A1 discloses a universal water purifier unitary assembly device comprising a device housing unit support structure, a manually operated air pump, a force-fed water filter cartridge of multiple separable stages and a separable sealing means to seal the junction and opening between said universal water purifier unitary assembly device housing unit support structure and water container of water to be filtered wherein junction and opening between of said water purifier unitary assembly device housing unit support structure and said water container is sealed to retain compressed air.

### Summary of the Invention

According to one aspect of the present invention, there is provided a portable container for water comprising:
A removable water filter cartridge comprising one or more fibre membranes which are effective to pass water in preference to air under the influence of a pressure differential;
a container housing for holding water, the housing having a base, side walls and a top wall, wherein the base incorporates a seat to receive the water filter cartridge to resist lateral movement;
an output valve coupled to the water filter cartridge; and
a pump for raising the internal pressure of the container housing, wherein the container housing comprises a main volume within which the fibre membranes of the water filter cartridge extend and a header volume above the water filter cartridge.

For a given internal capacity of a water container of the present invention, the provision of a header volume ensures that the surface area of the water filter in contact with water in the main volume is constant so long as there is water within the header volume. This keeps the membranes of the water filter working at maximum efficiency for longer than they would otherwise.

In a preferred embodiment, the container has a capacity of between 1 and 6 litres, more preferably between 5 and 6 litres. Preferably, the ratio of the header volume to the main volume is at least 1:6, more preferably at least 1:5.

The container is preferably made from plastic materials, and in particular, water-grade high-density polyethylene (HDPE). Plastic containers can be made using techniques well known in the art, such as rotational moulding or blow moulding. However, the container could instead be made from metal.

In a preferred embodiment, the base comprises an indented portion to resist blowout of the base when the container is internally pressurised.

Preferably, the container housing has a substantially square shape in plan view. More preferably, the container housing occupies a substantially cuboid envelope. The preferred shape and configuration allows containers of the present invention to be stacked on a standard shipping pallet in a very efficient manner for storage and transport.

In a preferred embodiment, the outlet valve, the pump and an integral handle are aligned on an imaginary line between opposite corners of container. This design feature makes filling the container and the dispensing of clean water much more convenient. It can also help maximise at all times the surface area of the membranes in contact with water within the main volume.

Preferably, the base and top wall of the container housing have complementary indented and raised portions to facilitate nesting for storage and transport.

Preferably, one or more sidewalls of the container housing comprise a pattern of indentations to provide enhanced structural rigidity at selected locations, thereby to resist deformation of the sidewalls when under load.

Preferably, the pump is a manually operated pump. Preferably, the pump is a piston pump comprising a non-return valve through which air may be passed into the container, and a piston shaft through which a piston head may be moved such that air is passed through the non-return valve. The container may additionally comprise a pressure valve for connection to a separate source of pressurised gas. Preferably, the pump is removable from the device to allow the liquid reservoir to be refilled. Preferably, the pump is mountable at an angle so that it is inclined relative to the top wall and a side wall. More preferably, the pump is mounted on a wall surface that is inclined relative to the top wall and the side wall as this enables substantially complete filling of the container.

Preferably, the output valve is a tap. Preferably, the tap has an external spout. Optionally, the external spout may comprise a hose fitting for receiving a removable water hose pipe. Preferably, the tap has a top surface portion which is aligned with a surface of the top wall of the container to provide a support surface for another water container to rest on when stacked one on top of another. Preferably, the tap comprises a tamper-evident compression screw fitting which resists removal of the tap and the associated water filter.

Preferred water filters for use with the present invention are suitable for ultrafiltration: that is to remove all particles of a size greater than 0.01 microns. In another preferred embodiment the filter is suitable for nanofiltration or reverse osmosis. Reverse osmosis filters are capable of removing everything (including salts and oils) apart from pure water (H₂O) from a liquid. Nanofiltration removes particles of a size greater than 0.001 microns (including aqueous salts).

Water is passed through the water filter under a pressure differential. This allows the water to be passed through finer filters than would be possible if the container were not pressurised.

A pore size of less than or equal to 25 nanometres is sufficient to remove most microbiological matter from the liquid, including viruses, thereby providing safe drinking water and a far more effective portable water filtration system than has previously been available. However, for additional security, preferred embodiments of the invention have a pore size of less than or equal to 20 nanometres, and more preferably have a pore size of less than or equal to 15 nanometres.

As is known in the art, the pore size of a material is in fact an average of the individual sizes of the pores (or holes) in the material, since it is inevitable that any material comprising a large number of pores will include some variation in these individual sizes. Preferred filters for use in the present invention have a tightly defined distribution of pore sizes such that the difference between the maximum pore size and the average pores size is minimized. Preferably, the standard deviation of the pore size distribution is less than 30% of the average pore size, and more preferably is less than 15% of the average pore size. In preferred embodiments of the invention, the filter has a maximum pore size of less than or equal to 30 nanometres, more preferably, less than or equal to 25 nanometres, and most preferably less than or equal to 20 nanometres. In other embodiments, the maximum pore size may be even lower in order to perform nanofiltration or reverse osmosis, for example.

Preferably, the water container of the present invention will filter water with a pressure differential of any size. For example, the operating pressure differential of a preferred embodiment is preferably greater than 10 kPa, more preferably in the range of 50 kPa-1500 kPa, more preferably in the range of 100 kPa-1000 kPa, more preferably 150 kPa-300 kPa.

The water filter of the present invention is a membrane filter. It preferably comprises at least one hydrophilic membrane. Hydrophilic membranes are attractive to water and therefore water is passed through them in preference to other liquids and to gases. In this way, not only is the filtration offered by the preferred embodiments improved, but it is possible to use the filter even when it is not completely immersed in the liquid.

Preferably, the membranes are capillary hollow fibre membranes. These membranes act to filter the water as only particles smaller than their pore size may pass through them. The fibre membranes may incorporate carbon or other chemical elements, or reverse osmosis membranes. A combination of different types of filter membranes may be included in the filter. These may include ultrafiltration, nanofiltration and reverse-osmosis membranes.

The water filter comprises a filter cartridge comprising a plurality of fibre membranes. The base incorporates a seat to receive the filter cartridge to resist lateral movement. This helps reduce the strain on the preferred fibre membranes.

Once water enters through the wall of a hollow fibre membrane under the influence of a pressure differential, it is transferred along its tube-like structure to the output. As a result, water may enter at any point along the membrane wall and reach the output while also being filtered.

### Brief Description of the Drawings

An example of the present invention will now be described in detail with reference to the accompanying drawings, in which:

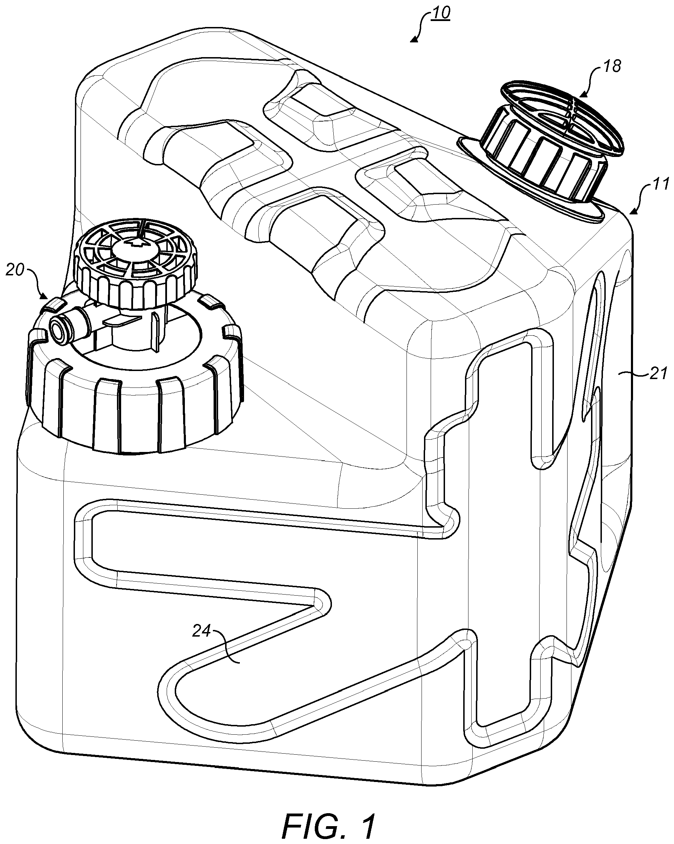

Figure 1 is a perspective view of a preferred water container;

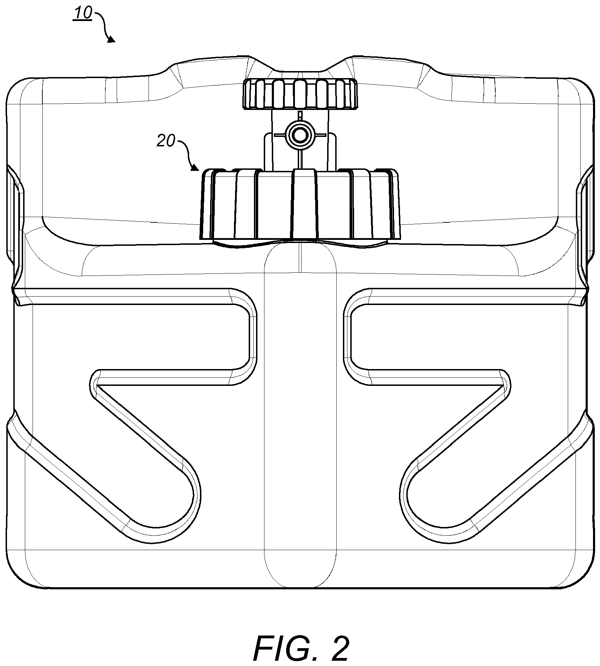

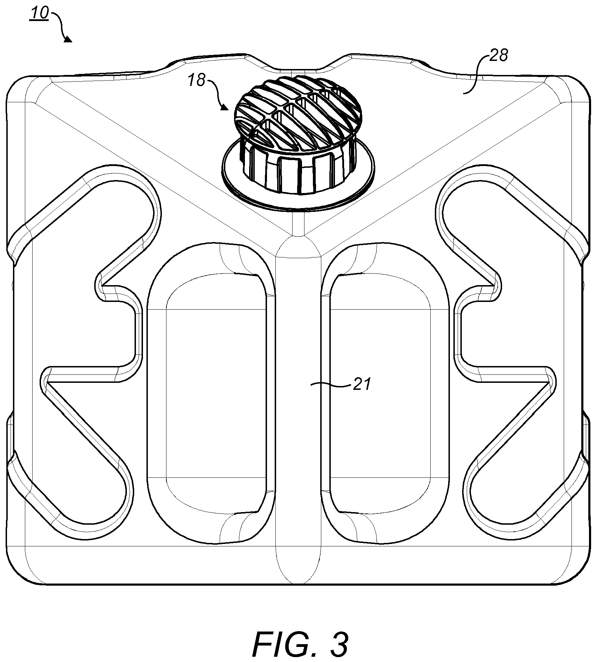

Figures 2 and 3 show opposite end elevations of the water container;

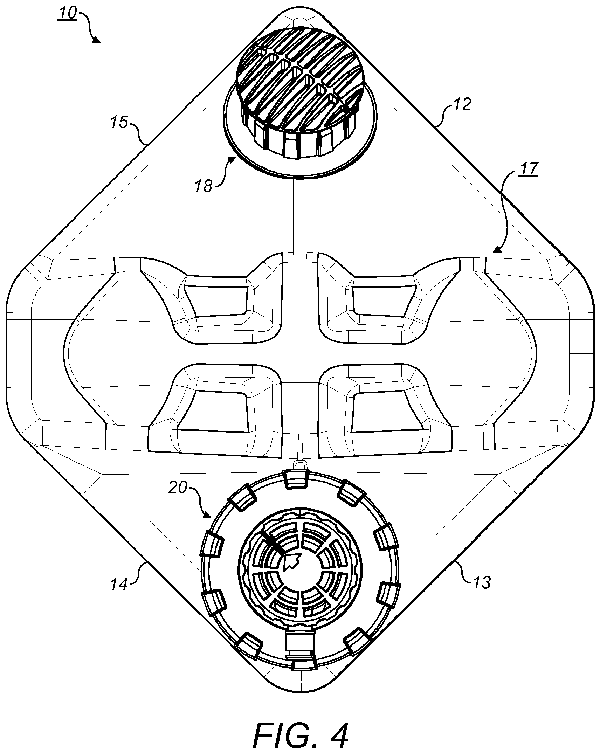

Figure 4 is a top elevation of the water container;

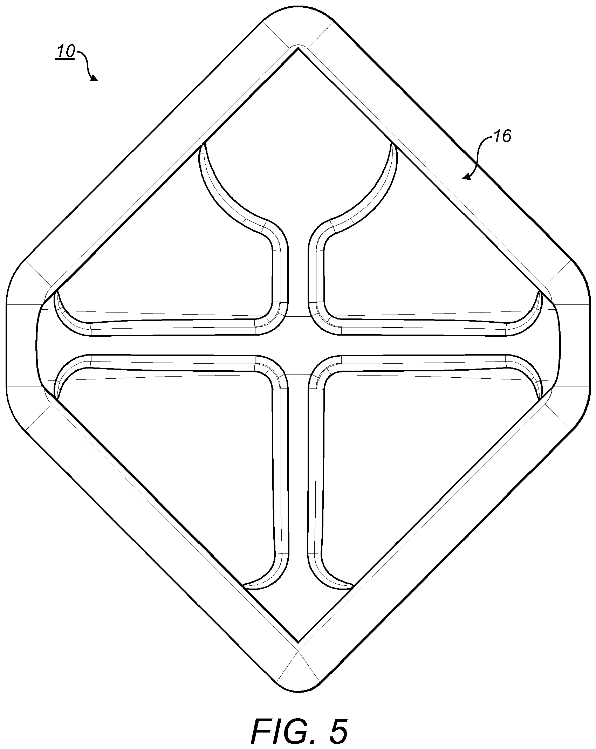

Figure 5 is a bottom elevation of the water container;

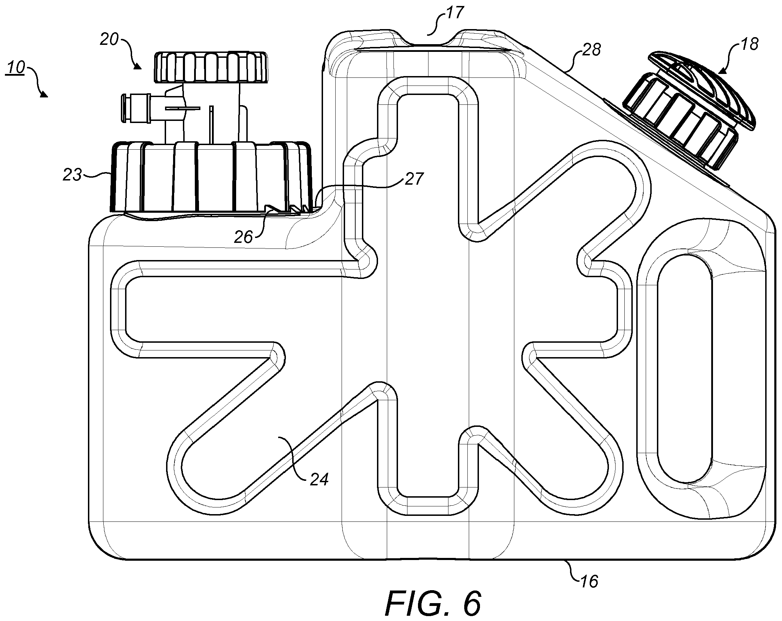

Figure 6 is a side elevation of the water container.

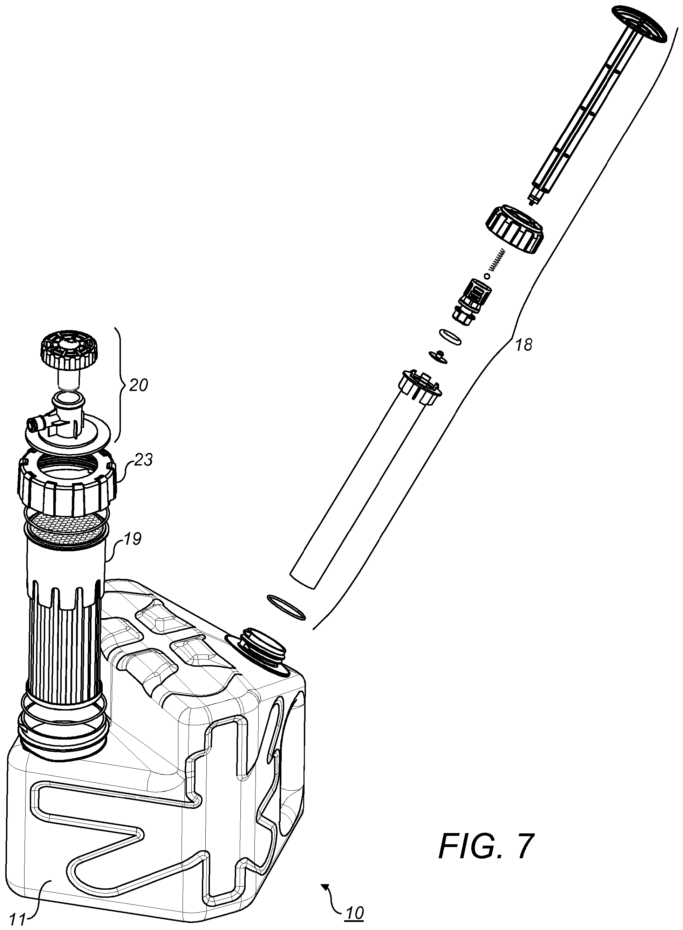

Figure 7 is a partially disassembled perspective view of the water container;
Figure 8 is a sectioned perspective view of the water container; and,

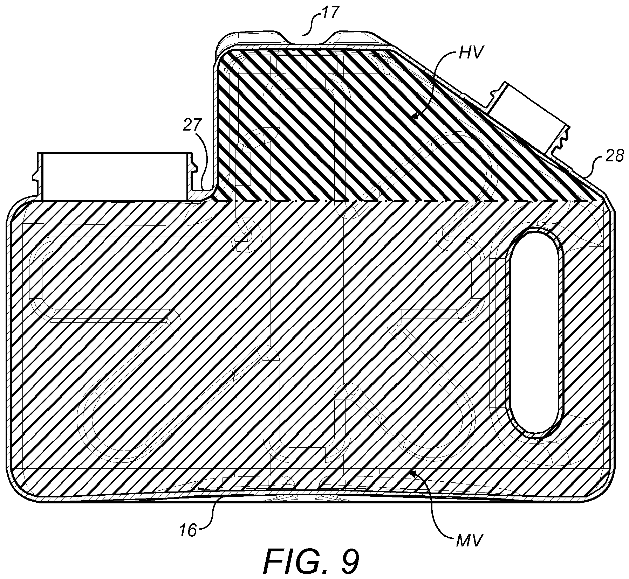

Figure 9 is a sectioned side elevation of the water container with main assembly components removed;

### Detailed Description

The accompanying figures show a water container 10 designed in accordance with the present invention. The water container 10 comprises a container housing 11 having sidewalls 12-15, a base 16 and a top 17. The water container 10 includes a removable manual pump unit 18 and a water filter cartridge 19 disposed within the housing 11, together with an externally mounted tap 20 coupled for fluid communication with the water filter cartridge 19. A carrying handle 21 is integrally formed at the corner of the walls 12 and 15. When constructed the water container 10 is sealed and is both water- and air-tight. No special tools are required for its assembly as all of the key assemblies incorporate snap- or screw fittings.

In the preferred embodiment, the maximum dimensions of the water container 10 are the same for length, width and height so that it occupies a substantially cuboid envelope. In a preferred commercial embodiment, these dimensions are 200mmx200mmx200mm, giving a capacity of substantially 6 litres. The generally cuboid shape of the container 10 and the position of the tap 20 makes it possible to orientate the water container in different ways when dispensing.

The base 16 and top wall 17 of the container housing 11 have complementary indented and raised portions and which form a cross shape (+) to facilitate nesting for storage and transport.

As shown, the tap 23 has a flat top surface portion 25 which is aligned with a surface of the top wall 17 of the container to provide a support surface for another water container to rest on when stacked one on top of another. The base 16 is also slightly concaved to resist deformation, creating shallow pockets which act as a sump for debris and forming an internal seat to receive the distal end of the filter cartridge 19 to resist lateral movement. This helps reduce the strain on the preferred fibre membranes 22.

The shape and configuration of the water container 10 shown in the figures allows them to be stacked on a standard shipping pallet in a very efficient manner for storage and transport.

The container is preferably made from plastics materials, and in particular, water-grade high-density polyethylene (HDPE). Plastics containers can be made using techniques well known in the art, such as rotational moulding or blow moulding.

The water filter cartridge 19 is made from a matrix of hollow fibre membranes 22 which typically have a mean pore size which is capable of ultra-filtration. As such, the filter cartridge 19 is effective to remove bacteria, viruses, cysts, parasites, fungi and all other water-born pathogens. In fact, such a filter removes all microbiological matter from the water to provide safe, sterile drinking water.

The fibre membranes 22 are potted at an open end proximal the tap 20 and sealed and capped at a distal end. A mesh wrap helps hold the fire membranes together.

The filter cartridge 19 extends within and is substantially entirely encompassed by a main volume MV of the container. In addition, the container has a header volume HV which sits above the top level of the membranes 22 in the container's normal upright orientation. For a given internal capacity of a water container of the present invention, the provision of a header volume ensures that the surface area of the water filter in contact with water in the main volume is constant so long as there is water within the header volume. This keeps the membranes of the water filter working at maximum efficiency for longer than they would otherwise.

The preferred fibre membranes 22 have a retention of greater than 99.999995% of bacteria, cysts, parasites and fungi, and greater than 99.999% of viruses from the water. The fibre membranes 22 also remove sediments and other deposits from the water.

The manual pump unit 18 provides the required pressure differential across the walls of the water container 10 to drive water through the walls of the hollow fibre membranes 22 and thereafter along the length of the fibre membranes to their open ends proximal the tap 20 when the tap is opened.

Providing a water filter cartridge 19 such as that described above allows the user to use water from a wide range of sources, including open sources of water, that is effectively rendered safe to drink.

Fibre membranes suitable for use with the present invention are available commercially, for example X-flow (TM) capillary membranes from Norit (www.norit.com) may be used. This hollow fibre ultra-filtration membrane 22 is effective to screen all turbidity, bacteria as well as viruses.

In the preferred commercial embodiment of the water container 10, given the relatively small capacity (typically 5 to 6 litres), the length of the preferred fibre membranes is relatively short - typically only 10 to 20 cm. For such lengths, the preferred filter cartridge incorporates 50 to 200, preferably 100 to 130, fibre membranes, giving an initial flow rate of at least 1 litre/minute at 50 kPa. It is important to provide a reasonable flow rate to encourage users to store unfiltered water in the container rather than transfer filtered water to a different container for storage where it would quickly become contaminated.

The water filter cartridge 19 abuts the base 16 and is attached to the top of the container 10 by a tamper evident screw cap compression fitting 23 to help indicate if the tap 20 has been removed and the filter cartridge 19 either removed or tampered with. The fitting 23 incorporates ratchet teeth 26which ride over a raised ridge 27 when the tap is fitted. These teeth shear off if someone subsequently attempts to unscrew and remove the tap.

The manual pump unit 18 shown in the figures is attached to the water container 10 by a screw cap compression fitting 24 to ensure a fluid tight seal. The entire pump unit 18 is designed to be removed from the water container 10. The pump 18 is mounted on a wall surface 28 that is inclined relative to the top wall and the side wall as this enables substantially complete filling of the container. Furthermore, the design of the container is such that the tap 20, the pump 18 and the handle 21 are aligned on an imaginary line between opposite corners of container. This design feature makes filling the container and the dispensing of clean water much more convenient. It can also help maximise at all times the surface area of the membranes in contact with water within the main volume when holding the container.

The water container 10 optionally also incorporates an additional carbon filter (not shown) which sits within a void within the tap fitting 20 through which water can pass before leaving through the tap. Carbon filters are known to be effective in the removal of chemicals from water. The carbon filter used in the preferred embodiment is an active carbon filter, although other types of carbon-based filters (such as charcoal filters) may be adopted.

In order to remove impurities from water, the pump 18 is unscrewed and removed from the container housing 11 and untreated water is poured into the container. The pump 18 is then re-attached to the container housing 11 and the pump handle is unlocked and repeatedly moved from a withdrawn position to a closed position thereby moving the piston head up and down through the piston shaft. This has the effect of forcing air through a non-return valve, thereby increasing the pressure within the container 11. When the user opens the tap 20, the internal pressure forces the water through the hollow tube membranes 22 within the water filter cartridge 19, through the optional carbon filter (if fitted), and ultimately out of the container 11 through the tap 20 for the user to collect.

The sidewalls 12-15 of the container housing 11 are optionally formed with a pattern of indentations 24 to provide enhanced structural rigidity at selected locations, thereby resisting deformation of the sidewalls when under load.

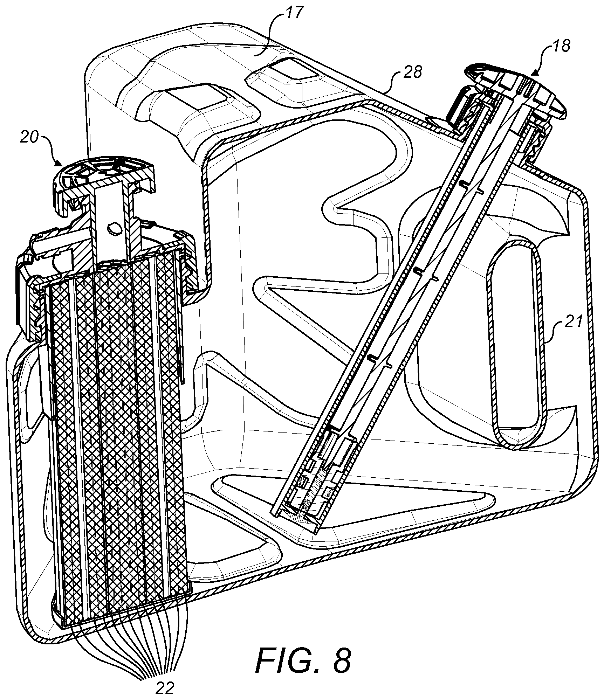

As shown in Figure 8, the container housing 11 can notionally be divided into a main volume MV within which the water filter 19 extends vertically and a header volume HV above the water filter 19. For a given internal capacity of a container of the present invention, the provision of a header volume HV ensures that the surface area of the membranes 22 of the water filter 19 in contact with water in the main volume MV is constant so long as there is water within the header volume HV. This keeps the membranes of the water filter working at maximum efficiency.

## Claims

1. A portable container for water comprising:
a removable water filter cartridge (19) comprising one or more fibre membranes (22) which are effective to pass water in preference to air under the influence of a pressure differential;
a container housing (11) for holding water, the housing having a base (16), side walls (12-15) and a top wall (17), wherein the base (16) incorporates a seat to receive the water filter cartridge (19) to resist lateral movement;
an output valve coupled to the water filter cartridge (19); and
a pump (18) for raising the internal pressure of the container housing (11),
wherein the container housing (11) comprises a main volume within which the fibre membranes (22) of the water filter cartridge (19) extend and a header volume above the water filter cartridge (19).

2. A container according to claim 1, having a water capacity of between 1 and 6 litres, more preferably between 5 and 6 litres.

3. A container according to claim 1 or 2, in which the ratio of the header volume to the main volume is at least 1:6, more preferably at least 1:5.

4. A container according to any preceding claim, in which the container housing (11) is made from plastic materials, preferably water-grade high-density polyethylene (HDPE).

5. A container according to any preceding claim, in which the base (16) comprises an indented portion to resist blow out of the base when the container (10) is internally pressurised.

6. A container according to any preceding claim, in which the container housing (11) has a substantially square shape in plan view.

7. A container according to any preceding claim, in which the container housing (11) occupies a substantially cuboid envelope.

8. A container according to any preceding claim, further comprising a handle (21), wherein the outlet valve, the pump (18) and an integral handle (21) are aligned on an imaginary line between opposite corners of the container housing.

9. A container according to any preceding claim, in which the base (16) and top wall (17) of the container housing (11) have complementary indented and raised portions to facilitate nesting for storage and transport.

10. A container according to any preceding claim, in which the pump (18) is removable from the device to allow the container housing (11) to be refilled.

11. A container according to any preceding claim, in which the pump (18) is mounted on a wall surface that is inclined relative to the top wall (17) and a side wall.

12. A container according to any preceding claim, in which the output valve is a tap (20).

13. A container according to claim 12, wherein the tap (20) has a top surface portion which is aligned with a surface of the top wall (17) of the container (10) to provide a support surface for the base (16) of another water container (10) to rest on when stacked one on top of another.

14. A container according to claim 12 or 13, in which the tap comprises a tamper-evident compression screw fitting which resists removal of the tap.

15. A container according to any preceding claim, wherein the water filter comprises at least one hydrophilic capillary hollow fibre membrane (22).

16. A container according to any preceding claim, in which the water filter (19) comprises a filter cartridge comprising a plurality of fibre membranes (22), preferably hollow fibre membranes.

## Patentansprüche

1. Tragbarer Behälter für Wasser aufweisend:
eine entfernbare Wasserfilterkartusche (19) umfassend eine oder mehrere Fasermembrane (22), die wirksam sind Wasser unter der Präferenz von Luft unter dem Einfluss einer Druckdifferenz durchzulassen;
ein Behältergehäuse (11) zum Zurückhalten von Wasser, wobei das Gehäuse eine Basis (16), Seitenwände (12-15) und ein Deckenwand (17) hat, wobei die Basis (16) einen Sitz zur Aufnahme der Filterkartusche (19) enthält, um seitlicher Bewegung zu widerstehen;
ein mit der Wasserfilterkartusche (19) gekoppeltes Ausgabeventil; und
eine Pumpe (18) zur Erhöhung des Innendrucks des Behältergehäuses (11),
wobei das Behältergehäuse (11) ein Hauptvolumen, in dem sich die Fasermembrane (22) der Filterkartusche (19) erstreckt und ein Kopfvolumen oberhalb der Wasserfilterkartusche (19) aufweist.

2. Behälter nach Anspruch 1, der eine Wasserkapazität von zwischen 1 und 6 Litern, besonders bevorzugt zwischen 5 und 6 Litern hat.

3. Behälter nach Anspruch 1 oder 2, bei dem das Verhältnis des Kopfvolumens zum Hauptvolumen mindestens 1:6, besonders bevorzugt mindestens 1:5 ist.

4. Behälter nach einem der vorhergehenden Ansprüche, bei dem das Behältergehäuse (11) aus Kunststoffmaterial, bevorzugt wassergeeignetem hochdichten Polyethylen (HDPE), hergestellt ist.

5. Behälter nach einem der vorhergehenden Ansprüche, in dem die Basis (16) einen eingekerbten Bereich aufweist, um einem blow-out der Basis zu widerstehen, falls der Behälter (10) unter Innendruck gesetzt wird.

6. Behälter nach einem der vorhergehenden Ansprüche, in dem das Behältergehäuse (11) in Draufsicht eine im Wesentlichen rechteckige Form hat.

7. Behälter nach einem der vorhergehenden Ansprüche, in dem das Behältergehäuse (11) einen im Wesentlichen quaderförmigen Umriss hat.

8. Behälter nach einem der vorhergehenden Ansprüche, weiter aufweisend einen Handgriff (21), wobei das Ausgabeventil, die Pumpe (18) und der integrale Handgriff an einer imaginären Linie zwischen einander entgegengesetzten Ende des Behältergehäuses ausgerichtet sind.

9. Behälter nach einem der vorhergehenden Ansprüche, in dem die Basis (16) und die Deckenwand (17) des Behältergehäuses (11) zueinander komplementäre eingekerbte und erhöhte Bereiche zur Vereinfachung des Ineinandersteckens für Lagerung und Transport haben.

10. Behälter nach einem der vorhergehenden Ansprüche, in dem die Pumpe (18) zum Nachfüllen des Behältergehäuses (11) vom Gerät entfernbar ist.

11. Behälter nach einem der vorhergehenden Ansprüche, in dem die Pumpe (18) an einer gegenüber der Deckenwand (17) und einer Seitenwand geneigten Wandfläche befestigt ist.

12. Behälter nach einem der vorhergehenden Ansprüche, in dem das Ausgabeventil ein Hahn (20) ist.

13. Behälter nach Anspruch 12, wobei der Hahn (20) einen Oberflächenabschnitt aufweist, der zur Fläche der Deckenwand (17) des Behälters (10) geneigt ist, um eine Stützfläche für die Basis (16) eines anderen Wasserbehälters (10) bereitzustellen, auf die er aufliegt falls einer über den anderen gestapelt wird.

14. Behälter nach Anspruch 12 oder 13, in dem der Hahn eine manipulationssichere Druck-Schraubverbindung aufweist, die einem Entfernen des Hahns widersteht.

15. Behälter nach einem der vorhergehenden Ansprüche, wobei der Wasserfilter wenigstens eine hydrophile Kapillarhohlmebran (22) aufweist.

16. Behälter nach einem der vorhergehenden Ansprüche, in dem der Wasserfilter (19) eine Filterkartusche aufweist, die eine Vielzahl von Fasermembranen (22), bevorzugt Hohlfasermembranen, aufweist.

## Revendications

1. Récipient portable pour de l'eau comprenant :
une cartouche de filtre à eau amovible (19) comprenant une ou plusieurs membranes en fibres (22) qui sont efficaces pour faire passer l'eau de préférence à l'air sous l'influence d'un différentiel de pression ;
un boîtier de récipient (11) pour retenir l'eau, le boîtier ayant une base (16), des parois latérales (12-15) et une paroi supérieure (17), dans lequel la base (16) comprend un siège pour recevoir la cartouche de filtre à eau (19) pour résister au mouvement latéral;
une soupape de sortie couplée à la cartouche de filtre à eau (19) ; et
une pompe (18) pour augmenter la pression interne du boîtier de récipient (11), dans lequel le boîtier de récipient (11) comprend un volume principal à l'intérieur duquel s'étendent les membranes en fibres (22) de la cartouche de filtre à eau (19) et un volume de collecteur au-dessus de la cartouche de filtre à eau (19).

2. Récipient selon la revendication 1, ayant une capacité en eau comprise entre 1 et 6 litres, plus préférablement entre 5 et 6 litres.

3. Récipient selon la revendication 1 ou 2, dans lequel le rapport du volume du collecteur au volume principal est d'au moins 1:6, plus préférablement d'au moins 1:5.

4. Récipient selon l'une quelconque des revendications précédentes, dans lequel le boîtier de récipient (11) est fabriqué à partir de matières plastiques, de préférence du polyéthylène haute densité (HDPE) de qualité alimentaire.

5. Récipient selon l'une quelconque des revendications précédentes, dans lequel la base (16) comprend une partie dentelée pour résister au soufflage de la base lorsque le récipient (10) est pressurisé intérieurement.

6. Récipient selon l'une quelconque des revendications précédentes, dans lequel le boîtier de récipient (11) a une forme sensiblement carrée en vue en plan.

7. Récipient selon l'une quelconque des revendications précédentes, dans lequel le boîtier de récipient (11) occupe une enveloppe sensiblement cuboïde.

8. Récipient selon l'une quelconque des revendications précédentes, comprenant en outre une poignée (21), dans lequel la soupape de sortie, la pompe (18) et une poignée intégrée (21) sont alignées sur une ligne imaginaire entre les coins opposés du boîtier du récipient.

9. Conteneur selon l'une quelconque des revendications précédentes, dans lequel la base (16) et la paroi supérieure (17) du boîtier de conteneur (11) ont des parties en retrait et en relief complémentaires pour faciliter l'emboîtement pour le stockage et le transport.

10. Récipient selon l'une quelconque des revendications précédentes, dans lequel la pompe (18) est amovible du dispositif pour permettre le remplissage du boîtier du récipient (11).

11. Récipient selon l'une quelconque des revendications précédentes, dans lequel la pompe (18) est montée sur une surface de paroi inclinée par rapport à la paroi supérieure (17) et une paroi latérale.

12. Récipient selon l'une quelconque des revendications précédentes, dans lequel la soupape de sortie est un robinet (20).

13. Récipient selon la revendication 12, dans lequel le robinet (20) a une partie de surface supérieure qui est alignée avec une surface de la paroi supérieure (17) du récipient (10) pour fournir une surface de support pour la base (16) d'un autre réservoir d'eau (10) sur laquelle reposer lorsqu'ils sont empilés l'un sur l'autre.

14. Récipient selon la revendication 12 ou 13, dans lequel le robinet comprend un raccord à vis de compression inviolable qui résiste à l'enlèvement du robinet.

15. Récipient selon l'une quelconque des revendications précédentes, dans lequel le filtre à eau comprend au moins une membrane en fibre creuse capillaire hydrophile (22).

16. Récipient selon l'une quelconque des revendications précédentes, dans lequel le filtre à eau (19) comprend une cartouche filtrante comprenant une pluralité de membranes en fibres (22), de préférence des membranes en fibres creuses.
